(19) Europäisches Patentamt
European Patent Office
Office européen des brevets

(11) **EP 4 259 419 B1**

(12) **EUROPÄISCHE PATENTSCHRIFT**

(45) Veröffentlichungstag und Bekanntmachung des Hinweises auf die Patenterteilung:
**12.02.2025   Patentblatt 2025/07**

(21) Anmeldenummer: **21836056.8**

(22) Anmeldetag: **07.12.2021**

(51) Internationale Patentklassifikation (IPC):
**B29C 65/00** (2006.01)      **B29C 65/08** (2006.01)

(52) Gemeinsame Patentklassifikation (CPC):
**B29C 65/08; B29C 66/1122; B29C 66/41; B29C 66/7352; B29C 66/73921; B29C 66/81461; B29C 66/8185; B29C 66/836;** B29C 66/81422; B29C 66/81423; B29C 66/81811; B29C 66/81812

(86) Internationale Anmeldenummer:
**PCT/EP2021/084560**

(87) Internationale Veröffentlichungsnummer:
**WO 2022/122720 (16.06.2022 Gazette 2022/24)**

(54) **KOMPENSATION THERMISCHER VERFORMUNG AN SONOTRODEN**

COMPENSATION OF THERMAL DEFORMATION ON SONOTRODES

COMPENSATION DE LA DÉFORMATION THERMIQUE DES SONOTRODES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität:  10.12.2020   DE 102020133013

(43) Veröffentlichungstag der Anmeldung:
18.10.2023   Patentblatt 2023/42

(73) Patentinhaber: Herrmann Ultraschalltechnik GmbH & Co. KG
76307 Karlsbad (DE)

(72) Erfinder:
• VOGLER, Ulrich
88690 Uhldingen-Mühlhofen (DE)
• ZENDLER, Stefan
75334 Straubenhardt (DE)

(74) Vertreter: WSL Patentanwälte Partnerschaft mbB
Kaiser-Friedrich-Ring 98
65185 Wiesbaden (DE)

(56) Entgegenhaltungen:
EP-B1- 2 219 848        EP-B9- 1 009 618
WO-A1-2012/107522     WO-A1-2012/107522
CA-A1- 3 018 946        DE-A1- 102007 060 442

• DUKANE: "What is the right material for making Ultrasonic Horns?", 28 June 2021 (2021-06-28), https://www.dukane.com, pages 1 - 3, XP055903149, Retrieved from the Internet <URL:https://www.dukane.com/blog/2021/06/28/ultrasonic-welding-horn-material/> [retrieved on 20220319]
• EMERSON INDUSTRIAL AUTOMATION: "Horn Catalog Ultrasonic Horn Catalog 2 Contents", 26 September 2019 (2019-09-26), pages 1 - 28, XP055903147, Retrieved from the Internet <URL:https://www.emerson.com/documents/automation/catalog-ultrasonic-horn-branson-en-us-160126.pdf> [retrieved on 20220318]
• DUKANE CORP.: "Sonotrodes", 1 April 2020 (2020-04-01), https://www.dukane.com/de/kunststoffschweismaschinen/ultraschallwerkzeuge/, pages 1 - 1, XP055903156, Retrieved from the Internet <URL:https://www.dukane.com/de/wp-content/uploads/sites/5/2020/04/Horn-Group-3-300dpi_5086.png> [retrieved on 20220319]
• PLLM DERKS: "The design of ultrasonic resonators with wide output cross-sections", DISSERTATION, 1 January 1984 (1984-01-01), XP055289546, Retrieved from the Internet <URL:https://pure.tue.nl/ws/files/3292148/34306.pdf> [retrieved on 20160719]

- ANONYMOUS: "Ultrasonic Horns", 31 May 2019 (2019-05-31), https://www.heatstaking.com/ultrasonic-horns/, pages 1 - 6, XP055903148, Retrieved from the Internet <URL:https://www.heatstaking.com/ultrasonic-horns/> [retrieved on 20220318]
- EMERSON INDUSTRIAL AUTOMATION: "Horn Catalog Ultrasonic Horn Catalog 2 Contents", 26 September 2019 (2019-09-26), pages 1 - 28, XP055903147, Retrieved from the Internet <URL:https://www.emerson.com/documents/automation/catalog-ultrasonic-horn-branson-en-us-160126.pdf> [retrieved on 20220318]

**Beschreibung**

Die vorliegende Erfindung betrifft eine Sonotrode für eine Ultraschallschweißvorrichtung mit einem unteren Abschnitt der Länge u und einem oberen Abschnitt der Länge o, wobei der obere Abschnitt und der untere Abschnitt nebeneinander auf einer Längsachse der Sonotrode angeordnet sind und die Gesamtlänge der Sonotrode in Richtung der Längsachse u + o beträgt, wobei der untere Abschnitt eine senkrecht zur Längsachse ausgerichtete Siegelfläche aufweist, wobei die Siegelfläche dafür vorgesehen ist, mit einem zu bearbeiteten Material in Kontakt zu treten.

Das Ultraschallschweißen ist ein seit geraumer Zeit etabliertes Verfahren, wenn es darum geht thermoplastische Kunststoffe form- oder stoffschlüssig miteinander zu verbinden. Die Anwendungsgebiete reichen von der Automobil- und Elektroindustrie bis hin zur Verpackungs-, Medizin- und Hygieneindustrie.

Typische Ultraschallschweißvorrichtungen weisen einen Ultraschallgenerator, einen Konverter, ggf. einen Amplitudentransformator und ein Schweißwerkzeug, die sogenannte Sonotrode, auf. Der Ultraschallgenerator erzeugt aus einer anliegenden Netzspannung eine Hochspannung in der gewünschten Ultraschallfrequenz. Die elektrische Schwingung des Ultraschallgenerators wird dann unter Ausnutzung des inversen piezoelektrischen Effekts im Konverter in eine mechanische Longitudinalschwingung umgewandelt und auf den Amplitudentransformator oder das Schweißwerkzeug übertragen. Mit Hilfe des Amplitudentransformators, der ggf. zwischen Konverter und Schweißwerkzeug angeordnet ist, kann die Amplitude der mechanischen Schwingung vergrößert oder verkleinert werden. Zusätzlich kann der Amplitudentransformator auch der Halterung des aus Konverter, Amplitudentransformator und Schweißwerkzeug bestehenden Schwinggebildes dienen. Die Sonotrode überträgt schließlich als eigentliches, aktives Schweißwerkzeug die mechanische Schwingung in die zu fügenden Bauteile. Dabei weist die Sonotrode eine Siegelfläche auf, über welche die Sonotrode mit dem zu bearbeitenden Material in Kontakt tritt.

Durch die mechanischen Schwingungen mit Frequenzen im Ultraschallbereich wird im zu fügenden Kunststoff Reibungswärme erzeugt und die Moleküle im Kunststoff zur Bewegung angeregt. In Folge wird der Kunststoff weich und beginnt zu schmelzen, sodass sich die zu fügenden Bauteile miteinander verbinden, wenn über eine gewisse Zeit ein bestimmter Druck auf die Bauteile ausgeübt wird. Die Bauteile sind anschließend auf Molekularebene fest miteinander verbunden.

Die Eigenschaften der hergestellten Schweißverbindung in Hinblick auf Festigkeit, Dichtigkeit und den optischen Eindruck hängen von verschiedenen Faktoren während des Ultraschallschweißens ab. So spielt einerseits die Frequenz und die Amplitude der Schwingung, die während dem Schwei-ßen zum Einsatz kommt, eine Rolle, andererseits beeinflusst auch die Dauer und die aufgebrachte Schweißkraft das Endergebnis der Schweißung. Darüber hinaus hängt das Schweißresultat auch von der geometrischen bzw. räumlichen Form des Schweißwerkzeuges ab. Die Form des Schweißwerkzeuges wird daher bereits im Vorfeld so gewählt, dass ein bestimmtes Schweißresultat beispielsweise im Hinblick auf den optischen Eindruck erzielt wird. Ein Beispiel hierfür findet sich z.B. in der WO 2012/107522 A1, die unter anderem eine Vorrichtung zum Herstellen einer Quersiegelnaht offenbart.

Verschiedene Geometrien für Schweißwerkzeuge werden beispielsweise in "The design of ultrasonic resonators with wide output cross-sections" von P. Derks beschrieben (Technische Hogeschool Eindhoven, https://doi.org/10.6100/IR34306).

Die Form des Schweißwerkzeuges, also der Sonotrode, kann sich jedoch auch noch während dem Schweißprozess verändern. Während dem Schweißvorgang kommt es zu Temperaturdifferenzen innerhalb der Sonotrode, die zu einer ungleichmäßigen Wärmeausdehnung des Sonotrodenmaterials führen. Dies führt zu teils konvex ausgebildeten Siegelflächen, die das Schweißresultat je nach zu verschweißendem Material stark beeinflussen. Insbesondere ein homogenes Verschwei-ßen von sehr dünnen Materialschichten, wie beispielsweise Vliesstoffen, die in der Medizinindustrie oder bei Hygieneprodukten zum Einsatz kommen, wird dadurch stark eingeschränkt. Während der Produktion kommt es zu Ergebnisschwankungen sowohl der Festigkeit der Verbindung als auch des optischen Eindrucks der Schweißverbindung. Dies ist darauf zurückzuführen, dass für das Verschweißen von sehr dünnen Materialschichten ein Abstand zwischen dem Schweißwerkzeug und einem Gegenwerkzeug, zwischen welche die Materialschichten angeordnet werden, entsprechend gering gewählt werden muss, um eine Verschweißung zu erzielen. Liegt dieser Abstand beispielsweise nur im Bereich weniger Mikrometer, so führt die Verformung der Siegelfläche der Sonotrode, die ebenfalls nur im Bereich weniger Mikrometer liegt, relativ betrachtet zu einer deutlichen lokalen Veränderung des Abstandes zwischen Schweißwerkzeug und Gegenwerkzeug. Somit wird in manchen Bereichen zu wenig Druck auf die zu fügenden Materialien aufgebracht, wohingegen in anderen Bereich zu viel Druck aufgebracht wird.

Um dieses Problem zu lösen oder zu minimieren, ist aus dem Stand der Technik bekannt, die Siegelflächen, die mit dem zu bearbeiteten Material in Kontakt treten, konkav zu schleifen. Die konkave Einbuchtung in der Siegelfläche hebt sich dann durch die konvexe thermische Ausdehnung des Sonotrodenmaterials auf, sodass während des Betriebs einer Ultraschallschweißvorrichtung eine ebene Siegelfläche und damit eine homogene Schweißung erzielt wird.

Nachteilig an dieser Lösung ist, dass nur bei einem ganz bestimmten Betriebspunkt der Ultraschallschweißvorrichtung die Verformung ideal kompensiert wird. Beim Starten der Ultraschallschweißvorrichtung aus dem kalten Zustand oder bei einer stärkeren Erwärmung des Werkzeuges als ursprünglich geplant wird dieser optimale Betriebspunkt nicht erreicht und damit auch keine homogene Schweißung erzielt.

Um dennoch ein möglichst reproduzierbares Bearbeitungsergebnis zu erzielen, wird alternativ oder zusätzlich zu dieser Lösung häufig eine starke Luftkühlung der Sonotrode eingesetzt, um die übermäßige Erhitzung bzw. die Verformung so gering wie möglich zu halten. Weiterhin ist bekannt, die Sonotrode im Bereich der Siegelfläche mit Kühlkanälen auszustatten, um die Temperatur der Sonotrode möglichst konstant zu halten. Allerdings kann auch auf diese Weise eine homogene Schweißung von sehr dünnen Materialien nicht garantiert werden.

Der vorliegenden Erfindung liegt daher die Aufgabe zugrunde, eine Sonotrode für eine Ultraschallschweißvorrichtung bereitzustellen, mit welcher auch sehr dünne Materialschichten miteinander in hoher Qualität verschweißt werden können.

Erfindungsgemäß wird diese Aufgabe durch eine Sonotrode gemäß Anspruch 1 gelöst.

Die Unterteilung eines unteren Abschnitts der Sonotrode führt dazu, dass der Effekt der thermischen Ausdehnung verringert wird und damit die Siegelfläche, die durch die Schlitze in mehrere Siegelflächenabschnitte unterteilt ist, nicht gekrümmt wird. Mit anderen Worten liegen alle Siegelflächenabschnitte in einer Ebene, treten gleichzeitig mit dem zu verschweißenden Material in Kontakt und üben denselben Druck auf das zu verschweißende Material aus. Somit können auch sehr dünne Materialschichten miteinander verschweißt werden, bei welchen eine konvexe Krümmung der Siegelfläche zu einem unbefriedigenden Schweißresultat führen würde.

In einer Ausführungsform ist die Sonotrode derart ausgestaltet, dass u > 0,25 o, vorzugsweise 0,8 o < u < 1,5 o und besonders bevorzugt 0,95 o < u < 1,1 o ist. Idealerweise entspricht also die Länge o des oberen Abschnitts im Wesentlichen der Länge u des unteren Abschnitts.

Entspricht in diesem Fall die Gesamtlänge o + u der Sonotrode in Richtung der Längsachse einer Wellenlänge λ, mit welcher die Sonotrode während einem Ultraschallschweißvorgang angeregt wird, führt dies dazu, dass die Grenze zwischen dem oberen Abschnitt und dem unteren Abschnitt im Bereich eines Schwingungsknotens der Anregungsschwingung verläuft. Die Anordnung der Grenze zwischen dem geschlitzten unteren Abschnitt und dem oberen Abschnitt in einem Schwingungsknoten hat den Vorteil, da es sich hierbei um einen spannungs- und dehnungsarmen Bereich handelt. So werden einerseits Spannungen zwischen den einzelnen Segmenten reduziert, aber auch der Einfluss der Segmente auf das Gesamtschwingverhalten der Sonotrode minimiert. Somit haben die Schlitze im unteren Abschnitt nahezu keinen Einfluss auf die auf das Material übertragene Schwingung.

Durch die erfindungsgemäßen Schlitze in dem unteren Abschnitt der Sonotrode wird damit einerseits die thermische Verformung der Siegelfläche minimiert und gleichzeitig das Schwingungsverhalten der Sonotrode nicht wesentlich beeinflusst, sodass das Schweißresultat insgesamt optimiert wird.

In einer weiteren Ausführungsform wird die Siegelfläche von zwei im Wesentlichen parallel zueinander verlaufenden, gegenüberliegenden Seitenflächen der Sonotrode begrenzt und der Schlitz schließt im Bereich der Siegelfläche mit den beiden Seitenflächen der Sonotrode jeweils einen Winkel < 90° und vorzugsweise einen Winkel zwischen 80° und 87° ein.

Die Anordnung der Schlitze unter einem Winkel zu den Seitenflächen der Sonotrode, die senkrecht zu einer Vorschubrichtung des Materials während des Schweißvorgangs angeordnet sind, führt dazu, dass über eine gesamte Breite der Sonotrode ein gleichmäßiges Schweißresultat erzielt werden kann. Unter der Breite der Sonotrode wird die Ausdehnung der Sonotrode verstanden, die während einem Schweißvorgang gleichzeitig mit dem zu bearbeitenden Material in Kontakt tritt und entspricht damit der Breite des Material, die während einem Schweißvorgang gleichzeitig bearbeitet wird. Wären die Schlitze senkrecht zu den Seitenflächen angeordnet, also parallel zur Vorschubrichtung, würde dies dazu führen, dass die Siegelfläche Bereiche aufweist, in welchen keine Schweißung stattfindet. Dies würde die Dichtigkeit und den optischen Eindruck der erzielten Schweißverbindung beeinträchtigen. Durch die Anordnung der Schlitze unter einem Winkel zu den Seitenflächen erfolgt jedoch eine Schweißung über die gesamte Breite der Sonotrode.

Bei dieser Ausführungsform muss nicht zwingend der gesamte Schlitz unter einem Winkel angeordnet sein. Es ist ausreichend, wenn lediglich ein unterer Teil des Schlitzes, der an die Siegelfläche anschließt, unter einem Winkel angeordnet ist. Eine solche Ausgestaltung bietet den Vorteil, dass sie fertigungstechnisch leichter herzustellen ist.

Erfindungsgemäß weist der Schlitz zwei Stützwände auf, wobei sich ein Abstand zwischen den Stützwänden zu der Siegelfläche hin verjüngt, wobei vorzugsweise die Verjüngung stufenförmig erfolgt, wobei besonders bevorzugt der Abstand an der Siegelfläche kleiner oder gleich 1 mm, bevorzugt kleiner oder gleich 0,5 mm und besonders bevorzugt kleiner oder gleich 0,3 mm ist.

Die Verjüngung der Schlitze zu der Siegelfläche hin bietet den Vorteil, dass flächenmäßig betrachtet nur ein möglichst geringer Bereich der Siegelfläche von den Schlitzen unterbrochen wird. Somit wird die Auswirkung der Schlitze auf das Schweißresultat abgesehen von der Kompensation der thermischen Ausdehnung möglichst gering gehalten.

In einer weiteren Ausführungsform weist der Schlitz an einem von der Siegelfläche abgewandten Ende eine Verbreiterung auf, wobei vorzugsweise die Siegelfläche von zwei im Wesentlichen parallel zueinander verlaufenden, gegenüberliegenden Seitenflächen der Sonotrode begrenzt wird und wobei die Verbreiterung in einer Ebene der zwei sich gegenüberliegenden Seitenflächen des unteren Abschnitts betrachtet kreisförmig ist.

Eine solche Verbreiterung bietet den Vorteil, dass Verspannungen, die sich aufgrund der Schwingung der Sonotrode und der thermischen Verformung möglicherweise zwischen den Segmenten aufbauen, reduziert werden.

In einer weiteren Ausführungsform ist eine weitere Verbreiterung zusätzlich im Bereich der stufenförmigen Verjüngung des Schlitzes angeordnet. Diese weitere Verbreiterung weist vorzugsweise, wie die Verbreiterung am von der Siegelfläche abgewandten Ende der Schlitze, in einer Ebene der zwei sich gegenüberliegenden Seitenfläche der Sonotrode einen kreisförmigen Querschnitt auf. Durch diese Anordnung wird Verspannungen zwischen den einzelnen Segmenten ebenfalls entgegen gewirkt.

In einer weiteren Ausführungsform wird die Siegelfläche von zwei im Wesentlichen parallel zueinander verlaufenden, gegenüberliegenden Seitenflächen und von einer vorderen und einer hinteren Fläche der Sonotrode begrenzt, wobei eine Breite des unteren Abschnitts zwischen der vorderen und der hinteren Fläche im Wesentlichen einer Breite des oberen Abschnitts zwischen der vorderen und der hinteren Fläche entspricht.

Mit anderen Worten ist in dieser Ausführungsform mindestens eine Dimension des oberen und unteren Abschnitts so gewählt, dass diese für den unteren und oberen Abschnitt im Wesentlichen identisch ist. Da vorzugsweise auch die Längen u und o des oberen und unteren Abschnitts in Richtung der Längsachse im Wesentlichen identisch sind, stimmen daher die Ausdehnungen des oberen und unteren Abschnitts in zwei Dimensionen im Wesentlichen miteinander überein.

In einer Ausführungsform ist die Ausdehnung in einer dritten Dimension zwischen den im Wesentlichen parallel zueinander verlaufenden, gegenüberliegenden Seitenflächen im unteren Abschnitt geringer als im oberen Abschnitt. Mit anderen Worten verjüngt sich die Sonotrode im unteren Abschnitt zur Siegelfläche hin.

In einer weiteren Ausführungsform ist eine Ausdehnung der Sonotrode im unteren Abschnitt sowohl zwischen der vorderen Fläche und der hinteren Fläche als auch zwischen den im Wesentlichen parallel zueinander verlaufenden, gegenüberliegenden Seitenflächen geringer als im oberen Abschnitt. Die Sonotrode verjüngt sich in dieser Ausführungsform in zwei Dimensionen zur Siegelfläche hin.

In einer weiteren Ausführungsform ist die Anzahl der Schlitze und damit eine Breite der einzelnen Segmente so gewählt, dass die konvexe, thermische Verformung der Sonotrode im Bereich der Siegelfläche weniger als 3 μm, vorzugsweise weniger als 2 μm beträgt. Die Verformung wird dabei in einer Richtung parallel zu der Längsachse zwischen dem Rand der Siegelfläche und der Ausdehnung der Sonotrode in der Mitte der Siegelfläche gemessen.

In einer weiteren Ausführungsform weist der untere Abschnitt mehrere Schlitze auf, wobei jeder Schlitz zwei Schlitzwände aufweist, wobei eine Breite der Segmente zwischen zwei benachbarten Schlitzwänden zweier benachbarter Schlitze höchstens (u+o)/3, vorzugsweise (u+o)/4 und besonders bevorzugt (u+o)/6 beträgt.

Es versteht sich, dass auch in einer Ausführungsform mit nur einem Schlitz die Breite der Segmente zwischen einer Schlitzwand und der vorderen bzw. hinteren Fläche der Sonotrode ebenfalls höchstens (u+o)/3, vorzugsweise (u+o)/4 und besonders bevorzugt (u+o)/6 betragen kann.

Die Anzahl der Schlitze hängt damit von der Gesamtbreite der Sonotrode zwischen der vorderen und hinteren Fläche der Sonotrode und der Länge u des unteren Abschnitts sowie der Länge o des oberen Abschnitts ab. Da die Längen u und o des oberen und unteren Abschnitts vorzugsweise in Abhängigkeit von der Wellenlänge, mit welcher die Sonotrode angeregt wird, gewählt werden, hängt damit die Anzahl der Schlitze von der Gesamtbreite der Sonotrode und der Wellenlänge der anregenden Ultraschallschwingung ab.

Die Anzahl der Schlitze wirkt sich insgesamt auf das Schwingungsverhalten der Sonotrode aus. Die Anzahl der Schlitze muss daher so gewählt werden, dass einerseits eine ausreichende Kompensation der thermischen Verformung erzielt wird, andererseits das Schwingungsverhalten der Sonotrode an sich aber möglichst wenig beeinflusst wird.

In einer weiteren Ausführungsform wird die Siegelfläche von zwei im Wesentlichen parallel zueinander verlaufenden, gegenüberliegenden Seitenflächen und von einer vorderen und einer hinteren Fläche der Sonotrode begrenzt, wobei die vordere Fläche zumindest an der Siegelfläche in einem Winkel < 90° zu den zwei sich gegenüberliegenden Seitenflächen angeordnet ist, wobei vorzugsweise auch die hintere Fläche zumindest an der Siegelfläche in einem Winkel < 90° zu den zwei sich gegenüberliegenden Seitenflächen angeordnet ist.

Die Anordnung der vorderen und vorzugsweise auch der hinteren Fläche unter einem Winkel < 90° zu den zwei sich gegenüberliegenden Seitenflächen bietet den Vorteil, dass mehrere der erfindungsgemäßen Sonotroden nebeneinander angeordnet werden können, um die Bearbeitungsbreite einer Ultraschallschweißvorrichtung zu vergrößern ohne dass es zu Unterbrechungen der Schweißnaht in Richtung der Bearbeitungsbreite kommt. Der winkligen Anordnung der vorderen und hinteren Fläche liegt daher dieselbe Überlegung zugrunde wie die winklige Anordnung der Schlitze im unteren Abschnitt der Sonotrode. Insbesondere ist auch hier nicht erforderlich, dass sich die gesamte vordere bzw. hintere Fläche in einem bestimmten Winkel zu den zwei sich gegenüberliegenden Seitenflächen erstreckt. Vielmehr ist lediglich die Anordnung der vorderen und hinteren Fläche im Bereich der Siegelfläche von Bedeutung. Bereiche der vorderen und hinteren Fläche, die nicht unmittelbar an die Siegelfläche anschließen, können auch in einem beliebigen anderen Winkel zu den zwei sich gegenüberliegenden Seitenflächen angeordnet sein.

In einer weiteren Ausführungsform weist der obere Abschnitt der Sonotrode mindestens einen Spalt auf, wobei der Spalt nicht in Verlängerung des Schlitzes des unteren Abschnitts angeordnet ist und/oder wobei der Spalt eine Spaltbreite aufweist, die größer ist als ein Abstand der Schlitzwände des Schlitzes.

Das Einbringen von Spalten in den oberen Abschnitt der Sonotrode hat den Vorteil, dass das Schwingungsverhalten der Sonotrode und auch die Ausdehnung der Sonotrode während der Anregung mit der Ultraschallschwingung in Richtung der Bearbeitungsbreite stabil gehalten wird. Wird eine Sonotrode mit einer Ultraschallschwingung angeregt, so kommt es auch in einer Richtung senkrecht zur Vorschubrichtung des Materials, also in der Bearbeitungsbreite zu einer Ausdehnung der Sonotrode. Dieser Effekt tritt bereits deutlich hervor, wenn die Breite der Sonotrode ein Drittel der anregenden Wellenlänge der Ultraschallschwingung überschreitet.

Da diese Spalten, anders als die Schlitze im unteren Abschnitt, keine thermische Verformung kompensieren sollen, sondern lediglich eine Verformung aufgrund der Ultraschallschwingung, können die Spalten einerseits anders geformt sein, beispielsweise breiter und andererseits unabhängig von der Schlitzen angeordnet sein. Insbesondere besteht keine Verbindung zwischen den Schlitzen des unteren Abschnitts und den Spalten des oberen Abschnitts.

In einer weiteren Ausführungsform ist eine Halterung zum Halten der Sonotrode in einer Ultraschallschweißvorrichtung vorgesehen, wobei die Halterung an den Segmenten des unteren Abschnitts der Sonotrode angeordnet ist.

Die Halterung der Sonotrode an den Segmenten des unteren Abschnitts bietet den Vorteil, dass das Schwingungsverhalten der Sonotrode durch die Halterung im Wesentlichen nicht beeinflusst wird. Wird die Halterung in einem Bereich angeordnet, in dem die Schwingungsamplitude am geringsten ist, führt dies dazu, dass die Position der Sonotrode wenig nachjustiert werden muss, um einen Bearbeitungsabstand zwischen Sonotrode und zu bearbeitenden Material konstant zu halten.

Bei der Anordnung der Halterung an den Segmenten im unteren Abschnitt ist außerdem der Effekt der thermischen Verformung geringer, da zwischen Halterung und zu bearbeitenden Material weniger Sonotrodenmaterial vorhanden ist, welches sich thermisch ausdehnen kann. Zudem wird im unteren Abschnitt die thermische Ausdehnung durch die Schlitze kompensiert, sodass ein Nachregeln der Position der Sonotrode relativ zu dem zu bearbeitenden Material in einem deutlich kleineren Bereich erfolgen kann oder je nach Anwendung gar nicht erforderlich ist.

Das der Erfindung zugrundeliegende Problem wird weiterhin durch ein Verfahren zur Ultraschallbearbeitung eines Materials gelöst, wobei das Verfahren die folgenden Schritte aufweist:

a) Bereitstellen einer Sonotrode nach einem der Ansprüche 1-10,
b) Bereitstellen eines Gegenwerkzeuges mit einer Siegelfläche,
c) Anordnung des Materials zwischen der Siegelfläche der Sonotrode und der Siegelfläche des Gegenwerkzeugs,
d) Anregen der Sonotrode mit einer Ultraschallschwingung mit der Wellenlänge λ,
e) Übertragen der Ultraschallschwingung auf das Material.

In einer weiteren Ausführungsform des erfindungsgemäßen Verfahrens gilt für die Wellenlänge λ:

$$0{,}8 \, (u + o) < \lambda < 1{,}2 \, (u + o)$$

und vorzugsweise

$$0{,}9 \, (u + o) < \lambda < 1{,}1 \, (u + o).$$

Vorzugsweise entspricht also die Gesamtlänge u + o der Sonotrode in Richtung der Längsachse im Wesentlichen der Wellenlänge λ, mit welcher die Sonotrode angeregt wird. In diesem Fall wird auch von einer λ-Sonotrode gesprochen.

In einer Ausführungsform gilt insbesondere $0{,}4 \, \lambda < u < 0{,}6 \, \lambda$ und vorzugsweise $\lambda/2 = u$. Mit anderen Worten entspricht die Ausdehnung der Schlitze in einer Richtung der Längsachse der halben Wellenlänge. Dies hat ebenfalls Vorteile für das Schwingungsverhalten der Sonotrode, da die Schlitze in einem Schwingungsknoten der Ultraschallschwingung enden. In diesem Fall nehmen die Schlitze nahezu keinen Einfluss auf das Schwingungsverhalten der Sonotrode und kompensieren lediglich die thermische Verformung der Sonotrode.

In einer weiteren Ausführungsform des erfindungsgemäßen Verfahrens wird während Schritt e) das Material mit einer Vorschubgeschwindigkeit v > 0 m/s zwischen der Siegelfläche der Sonotrode und der Siegelfläche des Gegenwerkzeuges hindurch bewegt.

Durch ein Abstimmen der Vorschubgeschwindigkeit auf den Vorgang des Ultraschallschweißens wird damit ein Schweißverfahren bereitgestellt, welches in einem getakteten oder kontinuierlichen Betrieb schlauch- und bahnförmige Materialien bearbeiten kann. Das zu bearbeitende Material wird hierbei kontinuierlich durch das Schweißwerkzeug geführt und wird in Abhängigkeit von der Vorschubgeschwindigkeit und der Taktung bzw. Ausgestaltung des Schweißwerkzeuges an bestimmten Stellen oder kontinuierlich mit Ultraschall bearbeitet. Entsprechende Verfahren kommen beispielsweise in der Verpackungsindustrie zum Einsatz, wobei ein schlauchförmiges Material, in welches in Produkt eingefüllt wird, in gewissen Abständen verschweißt und durchtrennt wird, um das Produkt einzeln zu verpacken. Weitere Anwendungsgebiete finden sich zudem beispielsweise bei der Bearbeitung bahnförmiger Vliesstoffe, die hauptsächlich in einem kontinuierlichen Verfahren in der Hygieneindustrie bearbeitet werden.

Weitere Vorteile, Merkmale und Anwendungsmöglichkeiten der vorliegenden Erfindung werden anhand der folgenden Beschreibung verschiedener Ausführungsformen der Erfindung und der dazugehörigen Figuren deutlich. Gleiche Elemente sind dabei mit gleichem Bezugszeichen bezeichnet.

Figur 1  zeigt eine dreidimensionale, schematische Darstellung einer Ausführungsform der erfindungsgemäßen Sonotrode.

Figur 2a  zeigt eine Draufsicht auf die Siegelfläche der in Figur 1 gezeigten Ausführungsform.

Figur 2b  zeigt eine Vergrößerung des markierten Bereichs in Figur 2a.

Figur 3a  zeigt eine Seitenansicht auf eine Seitenfläche der in Figur 1 gezeigten Ausführungsform.

Figur 3b  zeigt eine Vergrößerung des in Figur 3a markierten Bereichs.

Figur 4  zeigt eine weitere Seitenansicht auf die vordere Fläche der in Figur 1 gezeigten Ausführungsform.

Figur 5  zeigt eine dreidimensionale, schematische Darstellung einer weiteren Ausführungsform der erfindungsgemäßen Sonotrode.

Figur 6  zeigt eine schematische Darstellung einer Ausführungsform der erfindungsgemäßen Sonotrode in einer Ultraschallschweißvorrichtung.

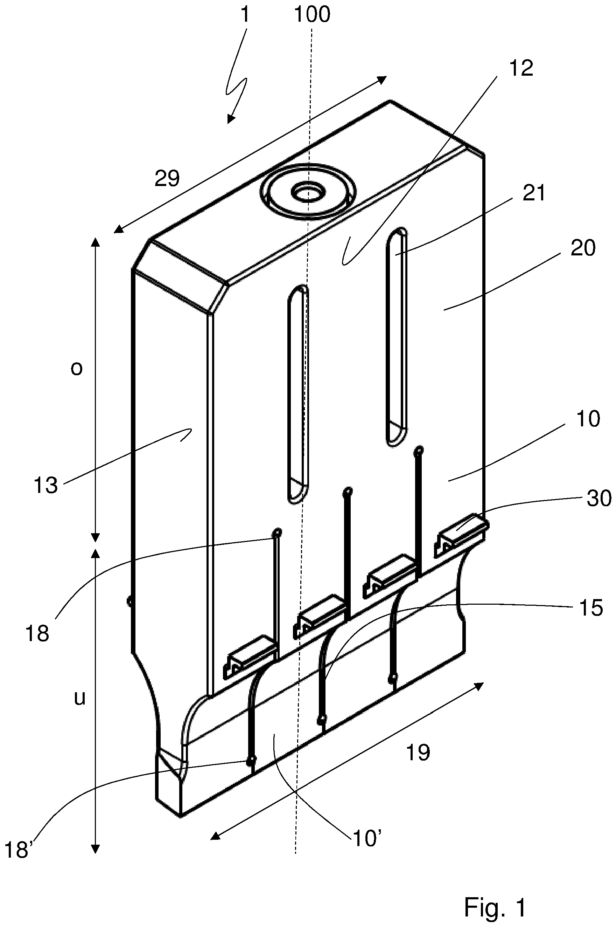

Die in Figur 1 gezeigte Ausführungsform der erfindungsgemäßen Sonotrode 1 für eine Ultraschallschweißvorrichtung lässt sich in einen unteren Abschnitt 10 der Länge u und einen oberen Abschnitt 20 der Länge o unterteilen. Der obere Abschnitt 20 und der untere Abschnitt 10 sind dabei nebeneinander auf einer Längsachse 100 der Sonotrode 1 angeordnet. Die Gesamtlänge der Sonotrode 1 in Richtung der Längsachse 100 beträgt u + o. Zudem entspricht die Länge u des unteren Abschnitts 10 der Länge o des oberen Abschnitts 20. Darüber hinaus entspricht eine Breite 19 des unteren Abschnitts 10 einer Breite 29 des oberen Abschnitts 20.

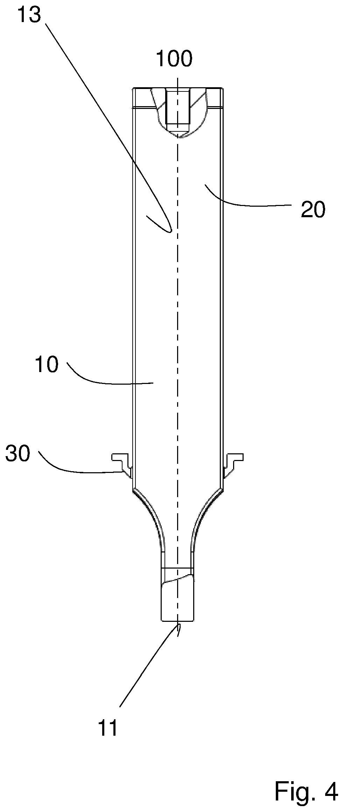

Aus Figur 4 ist ersichtlich, dass sich die vordere Fläche 13 zu der Siegelfläche 11 hin verjüngt. Eine Ausdehnung der Sonotrode1 im oberen Schnitt 20 und in einem oberen Bereich des unteren Abschnitts 10 in einer Ebene der vorderen Fläche 13 ist daher größer als eine Ausdehnung eines unteren Bereichs des unteren Abschnitts 10, der an die Siegelfläche 11 anschließt. Die hintere Fläche 14 ist dabei genauso ausgebildet wie die vordere Fläche 13.

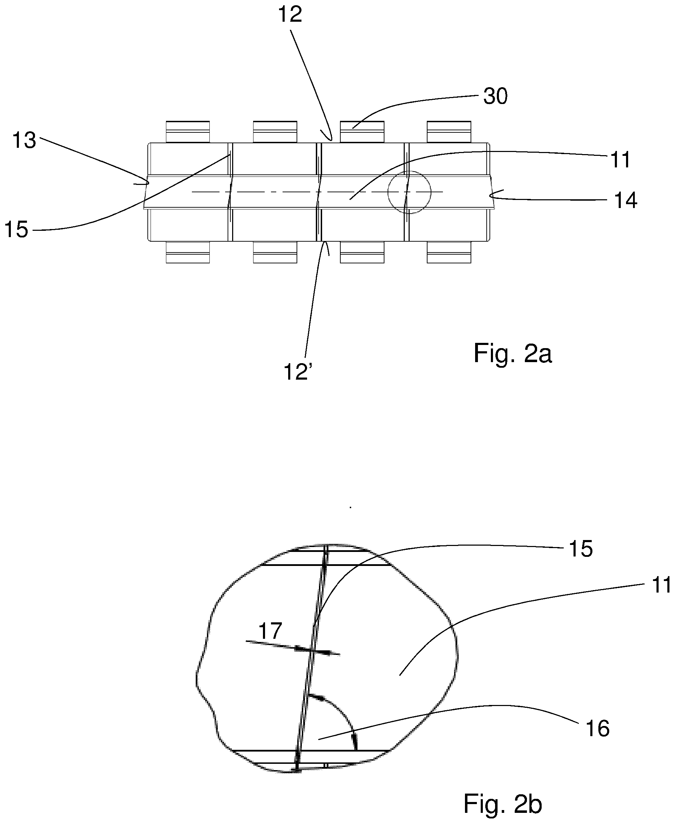

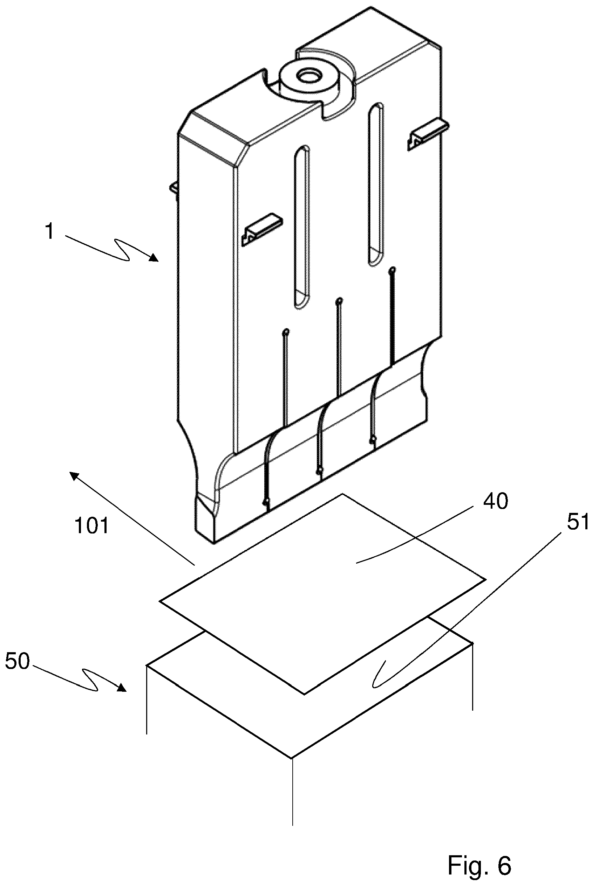

Weiterhin weist der untere Abschnitt 10 eine senkrecht zu der Längsachse 100 ausgerichtete Siegelfläche 11 auf, die in Figur 2a dargestellt ist. Die Siegelfläche 11 ist dafür vorgesehen, mit einem zu bearbeiteten Material 40 in Kontakt zu treten (siehe Figur 6). Die Breite 19 entspricht dabei der Breite, auf welcher mit der erfindungsgemäßen Sonotrode 1 eine Ultraschallbearbeitung des Materials 40 erfolgt.

Der untere Abschnitt 10 der Sonotrode 1 weist drei Schlitze 15 auf, wobei sich der Schlitz 15 von der Siegelfläche 11 bis zu einer der Siegelfläche 11 gegenüberliegenden Seiten des unteren Abschnitts 10 erstreckt. Der Schlitz 15 weist zwei Schlitzwände auf, die in einem Abstand 17 voneinander beabstandet sind (siehe Figur 2b).

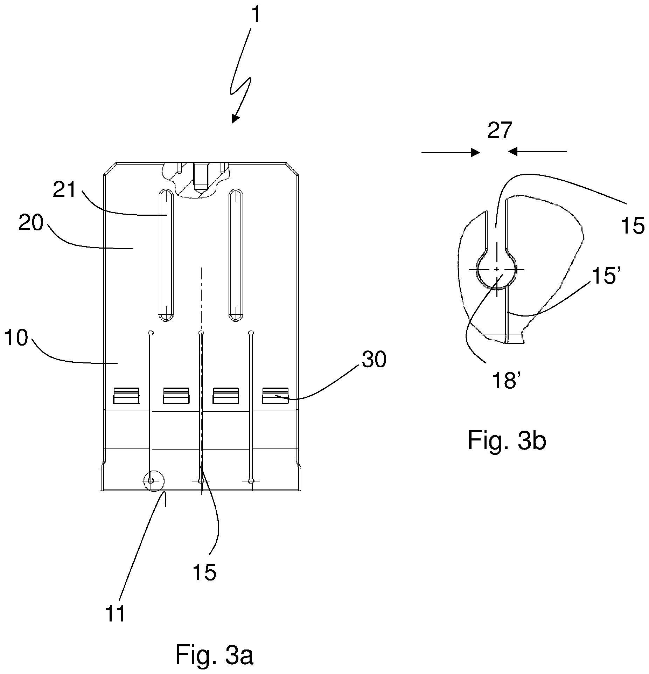

Aus Figur 3b ist zudem ersichtlich, dass sich der Schlitz 15 zur Siegelfläche 11 hin, wobei die Verjüngung stufenförmig erfolgt. Im Bereich der stufenförmigen Verjüngung ist eine Verbreiterung 18' angeordnet, die in einer Ebene der Seitenfläche 12 einen kreisförmigen Querschnitt hat. Der Abstand der Schlitzwände in dem Bereich 15' des Schlitzes 15, der zwischen der Verbreiterung 18' und der Siegelfläche 11 angeordnet ist, ist zudem deutlich geringer als ein Abstand 17 der Schlitzwände des Schlitze 15 oberhalb der Verbreiterung 18'.

Zusätzlich zu der Verbreiterung 18' im Bereich der stufenförmigen Verjüngung weist der Schlitz 15 eine weitere Verbreiterung 18 auf, die an einem von der Siegelfläche 11 abgewandten Ende des Schlitzes 15 angeordnet ist. In einer Ebene der Seitenfläche 12 betrachtet weist die Verbreiterung 18 ebenfalls einen kreisförmigen Querschnitt auf (siehe Figur 3a).

Durch die Verbreiterungen 18, 18' werden Spannungen, die sich zwischen den Segmenten 10' während eines Betriebes der Sonotrode 1 in einer Ultraschallschweißvorrichtung aufgrund der Schwingungen und thermischen Ausdehnung des Sonotrodenmaterials ausbilden könnten, vermieden oder zumindest reduziert.

In den Figuren 2a und 2b ist außerdem dargestellt, dass die Schlitze 15 im Bereich der Siegelfläche 11 mit der Seitenfläche 12 der Sonotrode 1 einen Winkel 16 von 81° einschließen. Die Seitenflächen 12, 12' verlaufen zueinander parallel, sind gegenüberliegend zueinander angeordnet und begrenzen die Siegelfläche 11 der Sonotrode 1. Wie in Figur 3a dargestellt sind die Schlitze 15 nur in einem kleinen Bereich 15' von wenigen Millimetern ab der Siegelfläche 11 in Richtung der Längsachse 100 unter diesem Winkel 16 zu der Seitenfläche 12 angeordnet. In dem daran anschließenden Bereich in Richtung der Längsachse 100 sind die Schlitze 15 senkrecht zu den beiden Seitenflächen 12, 12' angeordnet.

Darüber hinaus ist aus der Figur 2a ersichtlich, dass auch eine vordere Fläche 13 und eine hintere Fläche 14 der Sonotrode 1, die die Siegelfläche 11 zusätzlich zu den Seitenflächen 12, 12' begrenzen, ebenfalls unter einem Winkel < 90° zu der Seitenflächen 12 angeordnet sind. Dadurch kann die erfindungsgemäße Sonotrode 1 mit weiteren Sonotroden verbunden werden, um die Bearbeitungsbreite einer Ultraschallschweißvorrichtung zu vergrößern.

Durch die Schlitze 15 wird der untere Abschnitt 10 der Sonotrode 1 in mehrere, in einer Richtung senkrecht zur Längsachse 100 nebeneinanderliegende Segmente 10' unterteilt. Durch die Anordnung der Schlitze 15 in dem unteren Abschnitt 10 der Sonotrode 1 wird eine thermische Verformung der Siegelfläche 11 reduziert, sodass ein homogeneres Schweißresultat über die Breite 19 des unteren Abschnitts 10 erzielt wird.

Zusätzlich sind in dem oberen Abschnitt 20 zwei Spalten 21 mit einer Spaltbreite 27 angeordnet (siehe Figur 3a). Die Spalten 21 dienen dazu eine Ausdehnung der Sonotrode 1 in der Breite 29 des oberen Abschnitts 20 während des Betriebes der Sonotrode 1 in einer Ultraschallschweißvorrichtung zu minimieren.

Wie in den Figuren 1 und 3 angezeigt, sind die Spalten 21 unabhängig von den Schlitzen 15, also nicht in Verlängerung dieser oder auf einer gemeinsamen Linie angeordnet und haben zudem eine größere Spaltbreite 27, da durch die Spalten 21 ein anderer Verformungseffekt der Sonotrode 1 kompensiert wird als durch die Schlitze 15

Letztlich weißt die in den Figuren 1-4 gezeigte Ausführungsform Halterungen 30 auf, die in einem Bereich der Segmente 10' des unteren Abschnitts 10 angeordnet sind.

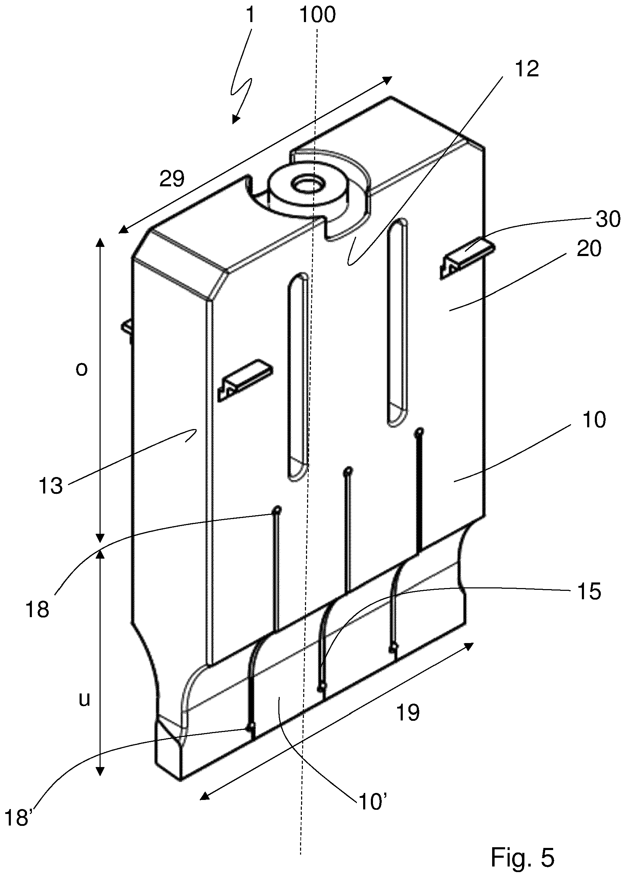

Die in Figur 5 gezeigte Ausführungsform der erfindungsgemäßen Sonotrode 1 unterscheidet sich von der in den Figuren 1-4 gezeigten Ausführungsform darin, dass die Halterungen 30 nicht in dem unteren Abschnitt 10, sondern in dem oberen Abschnitt 20 angeordnet sind.

In Figur 6 ist die in Figur 5 gezeigte Ausführungsform der Sonotrode 1 in einer Ultraschallschweißvorrichtung schematisch dargestellt. Zwischen der Sonotrode 1 und einem Gegenwerkzeug 50 wird ein Material 40 angeordnet, welches bearbeitet werden soll. Das Material 40 bewegt sich mit einer Vorschubgeschwindigkeit v > 0 m/s in eine Vorschubrichtung 101 zwischen der Sonotrode 1 und dem Gegenwerkzeug 50.

Während des Betriebes der Ultraschallschweißvorrichtung wird die Sonotrode 1 mit einer Ultraschallschwingung mit der Wellenlänge λ angeregt und diese Ultraschallschwingung über die Siegelfläche 11 auf das Material 40 übertragen. Das Material 40 wird durch die Ultraschallschwingung gegen eine Siegelfläche 51 des Gegenwerkzeugs 50 gedrückt, sodass durch die übertragenen Ultraschallschwingungen das Material 40 mittels Ultraschallbearbeitet wird. Bei dem Material 40 kann es sich beispielsweise um mehrere Lagen Vliesstoff handeln, die miteinander stoffschlüssig verbunden werden sollen. Durch das Auftreffen der Sonotrode 1 auf den Vliesstoff 40 beginnt dieser aufgrund der erzeugten Reibungswärme zu schmelzen und verbindet sich mit einem darunterliegenden Materialschicht.

Die Gesamtlänge o + u der Sonotrode 1 ist so gewählt, dass diese im Wesentlichen der Wellenlänge λ der anregenden Ultraschallschwingung entspricht. Zudem entspricht die Länge der Schlitze 15, also die Länge u des unteren Abschnitts 10 der halben Wellenlänge λ.

Durch die Wahl dieser Dimensionen wird sichergestellt, dass die Schlitze 15 die thermische Verformung der Siegelfläche 11 optimal kompensieren, gleichzeitig das Schwingverhalten der Sonotrode 1 jedoch nicht maßgeblich beeinflusst wird. So können mit der erfindungsgemäßen Sonotrode 1 auch sehr dünne Materialschichten 40 homogen miteinander verschweißt bzw. allgemein mit Ultraschall bearbeitet werden.

## Bezugszeichenliste

| 1 | Sonotrode |
|---|---|
| 10 | unterer Abschnitt |
| 10' | Segmente |
| 11 | Siegelfläche der Sonotrode |
| 12, 12' | parallel zueinander verlaufende, gegenüberliegende Seitenflächen |
| 13 | vordere Fläche |
| 14 | hintere Fläche |
| 15 | Schlitz |
| 15' | zur Siegelfläche hin angeordneter Teilabschnitt des Schlitz |
| 16 | Winkel |
| 17 | Abstand der Schlitzwände |
| 18, 18' | Verbreiterung |
| 19 | Breite des unteren Abschnitts |
| 20 | oberer Abschnitt |
| 21 | Spalt |
| 27 | Spaltbreite |
| 29 | Breite des oberen Abschnitts |
| 30 | Halterung |
| 40 | Material |
| 50 | Gegenwerkzeug |
| 51 | Siegelfläche des Gegenwerkzeuges |
| 100 | Längsachse |
| 101 | Vorschubrichtung |

## Patentansprüche

1. Sonotrode (1) für eine Ultraschallschweißvorrichtung mit einem unteren Abschnitt (10) der Länge u und einem oberen Abschnitt (20) der Länge o, wobei der obere Abschnitt (20) und der untere Abschnitt (10) nebeneinander auf einer Längsachse (100) der Sonotrode (1) angeordnet sind und die Gesamtlänge der Sonotrode (1) in Richtung der Längsachse (100) u + o beträgt, wobei der untere Abschnitt (10) eine senkrecht zu der Längsachse (100) ausgerichtete Siegelfläche (11) aufweist, wobei die Siegelfläche (11) dafür vorgesehen ist, mit einem zu bearbeitenden Material (40) in Kontakt zu treten, wobei der untere Abschnitt (10) einen Schlitz (15) aufweist, wobei sich der Schlitz (15) vor der Siegelfläche (11) bis zu einer der Siegelfläche (11) gegenüberliegenden Seite des unteren Abschnitts (10) erstreckt, sodass der untere Abschnitt (10) der Sonotrode (1) in mehrere, in einer Richtung senkrecht zur Längsachse (100) nebeneinander liegende Segmente (10') unterteilt ist, wobei der Schlitz (15) zwei Schlitzwände aufweist, **dadurch gekennzeichnet, dass** sich ein Abstand (17) zwischen den Schlitzwänden zu der Siegelfläche (11) hin verjüngt.

2. Sonotrode (1) nach dem vorhergehenden Anspruch, wobei $u > 0{,}25o$, vorzugsweise $0{,}8o < u < 1{,}5o$ und besonders bevorzugt $0{,}95o < u < 1{,}1o$ ist.

3. Sonotrode (1) nach einem der vorhergehenden Ansprüche, wobei die Siegelfläche (11) von zwei im Wesentlichen parallel zueinander verlaufenden, gegenüberliegenden Seitenflächen (12, 12') der Sonotrode (1) begrenzt wird und der Schlitz (15) im Bereich der Siegelfläche (11) mit den beiden Seitenflächen (12, 12') der Sonotrode (1) jeweils einen Winkel (16) <90° und vorzugsweise einen Winkel (16) zwischen 80° und 87° einschließt.

4. Sonotrode (1) nach einem der vorhergehenden Ansprüche, wobei die Verjüngung stufenförmig erfolgt, wobei bevorzugt der Abstand (17) kleiner oder gleich 1 mm, bevorzugt kleiner oder gleich 0,5 mm und besonders bevorzugt kleiner oder gleich 0,3 mm ist.

5. Sonotrode (1) nach einem der vorhergehenden Ansprüche, wobei der Schlitz (15) an einem von der Siegelfläche (11) abgewandten Ende eine Verbreiterung (18) aufweist, wobei vorzugsweise die Siegelfläche (11) von zwei im Wesentlichen parallel zueinander verlaufenden, gegenüberliegenden Seitenflächen (12, 12') der Sonotrode (1) begrenzt wird und wobei die Verbreiterung (18) in einer Ebene der zwei sich gegenüberliegenden Seitenflächen (12, 12') betrachtet kreisförmig ist.

6. Sonotrode (1) nach einem der vorhergehenden Ansprüche, wobei die Siegelfläche (11) von zwei im Wesentlichen parallel zueinander verlaufenden, gegenüberliegenden Seitenflächen (12, 12') und von einer vorderen (13) und einer hinteren (14) Fläche der Sonotrode (1) begrenzt wird, wobei eine Breite (19) des unteren Abschnitts (10) zwischen der vorderen (13) und der hinteren (14) Fläche im Wesentlichen einer Breite (29) des oberen Abschnitts (20) zwischen der vorderen (13) und der hinteren (14) Fläche entspricht.

7. Sonotrode (1) nach einem der vorhergehenden Ansprüche, wobei der untere Abschnitt (10) mehrere Schlitze (15) aufweist, wobei jeder Schlitz (15) zwei Schlitzwände aufweist, wobei eine Breite der Segmente zwischen zwei benachbarten Schlitzwänden zweier benachbarter Schlitze (15) höchstens (u+o)/3, vorzugsweise (u+o)/4 und besonders bevorzugt (u+o)/6 beträgt.

8. Sonotrode (1) nach einem der vorhergehenden Ansprüche, wobei die Siegelfläche (11) von zwei im Wesentlichen parallel zueinander verlaufenden, gegenüberliegenden Seitenflächen (12, 12') und von einer vorderen (13) und einer hinteren (14) Fläche der Sonotrode (1) begrenzt wird, wobei die vordere Fläche (13) zumindest an der Siegelfläche (11) in einem Winkel kleiner als 90° zu den zwei sich gegenüberliegenden Seitenflächen (12, 12') angeordnet ist, wobei vorzugweise auch die hintere Fläche (14) zumindest an der Siegelfläche (11) in einem Winkel kleiner als 90° zu den zwei sich gegenüberliegenden Seitenflächen (12, 12') angeordnet ist.

9. Sonotrode (1) nach einem der vorhergehenden Ansprüche, wobei der obere Abschnitt (20) der Sonotrode (1) mindestens einen Spalt (21) aufweist, wobei der Spalt (21) nicht in Verlängerung des Schlitzes (15) des unteren Abschnitts (10) angeordnet ist und/oder wobei der Spalt (21) eine Spaltbreite (27) aufweist, die größer ist als ein Abstand (17) der Schlitzwände des Schlitzes (15).

10. Sonotrode (1) nach einem der vorhergehenden Ansprüche, wobei eine Halterung (30) zum Halten der Sonotrode (1) in einer Ultraschallschweißvorrichtung vorgesehen ist, wobei die Halterung (30) an den Segmenten (10') des unteren Abschnitts (10) der Sonotrode (1) angeordnet ist.

11. Verfahren zur Ultraschallbearbeitung eines Materials (40) mit den Schritten

  a) Bereitstellen einer Sonotrode (1) nach einem der Ansprüche 1 bis 10,
  b) Bereitstellen eines Gegenwerkzeuges (50) mit einer Siegelfläche (51),
  c) Anordnen des Materials zwischen der Siegelfläche (11) der Sonotrode (1) und der Siegelfläche (51) des Gegenwerkzeuges (50),
  d) Anregen der Sonotrode (1) mit einer Ultraschallschwingung mit der Wellenlänge λ,
  e) Übertragen der Ultraschallschwingung auf das Material (40).

12. Verfahren nach Anspruch 11, wobei für die Wellenlänge λ $0{,}8(u + o) < \lambda < 1{,}2(u + o)$ und vorzugsweise 0,9(*u* + *o*) < λ < 1,1(*u* + *o*) gilt.

13. Verfahren nach Anspruch 12, wobei 0,4λ < *u* < 0,6λ, vorzugsweise λ/2 = u gilt.

14. Verfahren nach einem der Ansprüche 11 bis 13, wobei während Schritt e) das Material (40) mit einer Vorschubgeschwindigkeit v > 0 m/s in einer Vorschubrichtung (101) zwischen der Siegelfläche (11) der Sonotrode (1) und der Siegelfläche (51) des Gegenwerkzeuges (50) hindurchbewegt wird.

**Claims**

1. A sonotrode (1) for an ultrasonic welding apparatus, having a lower portion (10) of length u and an upper portion (20) of length o, the upper portion (20) and the lower portion (10) being arranged adjacent to each other on a longitudinal axis (100) of the sonotrode (1), and the total length of the sonotrode (1) in the direction of the longitudinal axis (100) being u + o, the lower portion (10) having a sealing surface (11) oriented perpendicular to the longitudinal axis (100), the sealing surface (11) is intended to come into contact with a material (40) to be processed, wherein the lower portion (10) has a slot (15), wherein the slot (15) extends from the sealing surface (11) to a side of the lower portion (10) opposing the sealing surface (11), such that the lower portion (10) of the sonotrode (1) is divided into a plurality of segments (10') which lie adjacent to each other in a direction perpendicular to the longitudinal axis (100), the slot (15) having two slot walls, **characterized in that** a spacing (17) between the slot walls tapers in the direction of the sealing surface (11).

2. The sonotrode (1) according to the preceding claim, wherein *u* > 0,25*o*, preferably 0,8*o* < *u* < 1,5*o*, and particularly preferably 0,95*o* < *u* < 1,1*ō*.

3. The sonotrode (1) according to any of the preceding claims, wherein the sealing surface (11) is bordered by two opposing side surfaces (12, 12') of the sonotrode (1) which extend essentially parallel to each other, and the slot (15) in the region of the sealing surface (11) forming an angle (16) of < 90°, and preferably an angle (16) of between 80° and 87°, with each of the two side surfaces (12, 12') of the sonotrode (1).

4. The sonotrode (1) according to any of the preceding claims, wherein the tapering is stepped, wherein said spacing (17) preferably is less than or equal to 1 mm, preferably less than or equal to 0.5 mm, and particularly preferably less than or equal to 0.3 mm.

5. The sonotrode (1) according to any of the preceding claims, wherein the slot (15) has a widening (18) on an end facing away from the sealing surface (11), the sealing surface (11) preferably being bordered by two opposing side surfaces (12, 12') of the sonotrode (1), which extend essentially parallel to each other, and wherein the widening (18) is circular when viewed on a plane of the two opposing side surfaces (12, 12').

6. The sonotrode (1) according to any of the preceding claims, wherein the sealing surface (11) is bordered by two opposing side surfaces (12, 12') which are essentially parallel to each other, and bordered by a front surface (13) and a rear surface (14) of the sonotrode (1), wherein a width (19) of the lower portion (10) between the front surface (13) and the rear surface (14) essentially corresponds to a width (29) of the upper portion (20) between the front surface (13) and the rear surface (14).

7. The sonotrode (1) according to any of the preceding claims, wherein the lower portion (10) has a plurality of slots (15), each slot (15) having two slot walls, a width of the segments between two adjacent slot walls of two adjacent slots (15) being at most (u+o)/3, preferably (u+o)/4, and more preferably (u+o)/6.

8. The sonotrode (1) according to any of the preceding claims, wherein the sealing surface (11) is bordered by two opposing side surfaces (12, 12') which extend essentially parallel to one another, and bordered by a front surface (13) and a rear surface (14) of the sonotrode (1), wherein the front surface (13) is arranged, at least on the sealing surface (11), at an angle of less than 90° to the two opposing side surfaces (12, 12'), wherein preferably the rear surface (14) is also arranged, at least on the sealing surface (11), at an angle smaller than 90° to the two opposing side surfaces (12, 12').

9. The sonotrode (1) according to any of the preceding claims, wherein the upper portion (20) of the sonotrode (1) has at least one gap (21), wherein the gap (21) is not arranged along an extension of the slot (15) of the lower portion (10), and/or wherein the gap (21) has a gap width (27) that is larger than a spacing (17) of the slot walls of the slot (15).

10. The sonotrode (1) according to any of the preceding claims, wherein a support (30) is provided for holding the sonotrode (1) in an ultrasonic welding apparatus, the support (30) being arranged on the segments (10') of the lower portion (10) of the sonotrode (1).

11. A method for ultrasonic processing of a material (40) comprising the following steps:

a) providing a sonotrode (1) according to any of claims 1 to 10,

b) providing a counter-tool (50) having a sealing surface (51),

c) arranging the material between the sealing surface (11) of the sonotrode (1) and the sealing surface (51) of the counter-tool (50),

d) exciting the sonotrode (1) with an ultrasonic oscillation of wavelength λ,

e) transferring the ultrasonic vibration to the material (40).

12. The method according to claim 11, wherein the following applies to wavelength λ 0,8($u + o$) < λ < 1,2($u + o$) and preferably 0,9($u + o$) < λ < 1,1($u + o$).

13. The method according to claim 12, wherein 0,4λ < $u$ < 0,6λ, and preferably λ /2 = $u$.

14. The method according to one of claims 11 to 13 wherein, during step e) the material (40) is passed at a feed rate of v > 0 m/s in a feed direction (101) between the sealing surface (11) of the sonotrode (1) and the sealing surface (51) of the counter-tool (50).

**Revendications**

1. Sonotrode (1) pour dispositif de soudage par ultrasons comportant une partie inférieure (10) de longueur u et une partie supérieure (20) de longueur o, dans laquelle la partie supérieure (20) et la partie inférieure (10) sont agencées l'une à côté de l'autre sur un axe longitudinal (100) de la sonotrode (1) et la longueur totale de la sonotrode (1) dans la direction de l'axe longitudinal (100) est u + o, dans laquelle la partie inférieure (10) présente une surface de soudage (11) orientée perpendiculairement à l'axe longitudinal (100), dans laquelle la surface de soudage (11) est prévue pour venir en contact avec un matériau (40) à usiner, dans laquelle
la section inférieure (10) présente une fente (15), dans laquelle la fente (15) s'étend devant la surface de soudage (11) jusqu'à un côté de la partie inférieure (10) opposé à la surface de soudage (11), de sorte que la partie inférieure (10) de la sonotrode (1) est divisée en plusieurs segments (10') mutuellement adjacents dans une direction perpendiculaire à l'axe longitudinal (100), dans laquelle la fente (15) présente deux parois de fente, **caractérisée en ce qu'**une distance (17) entre les parois de fente se rétrécit en direction de la surface de soudage (11).

2. Sonotrode (1) selon la revendication précédente, dans laquelle $u$ > 0,25 $o$, de préférence 0,8 $o$ < $u$ < 1,5 $o$, et de manière particulièrement préférée 0,95 $o$ < $u$ < 1,1 $o$.

3. Sonotrode (1) selon l'une des revendications précédentes, dans laquelle la surface de soudage (11) est délimitée par deux surfaces latérales opposées (12, 12') de la sonotrode (1) s'étendant sensiblement parallèlement l'une à l'autre, et la fente (15) dans la zone de la surface de soudage (11) forme avec les deux surfaces latérales (12, 12') de la sonotrode (1) un angle (16) < 90° et de préférence un angle (16) compris entre 80° et 87°.

4. Sonotrode (1) selon l'une des revendications précédentes, dans laquelle le rétrécissement se fait par paliers, dans laquelle la distance (17) est de préférence inférieure ou égale à 1 mm, de préférence inférieure ou égale à 0,5 mm et de manière particulièrement préférée inférieure ou égale à 0,3 mm.

5. Sonotrode (1) selon l'une des revendications précédentes, dans laquelle la fente (15) présente un élargissement (18) à une extrémité opposée à la surface de soudage (11), dans laquelle la surface de soudage (11) est de préférence délimitée par deux surfaces latérales opposées (12, 12') de la sonotrode (1) qui s'étendent sensiblement parallèlement l'une à l'autre, et dans laquelle l'élargissement (18) est circulaire vu dans un plan des deux surfaces latérales opposées (12, 12').

6. Sonotrode (1) selon l'une des revendications précédentes, dans laquelle la surface de soudage (11) est délimitée par deux surfaces latérales opposées (12, 12') s'étendant sensiblement parallèlement l'une à l'autre et par une surface avant (13) et une surface arrière (14) de la sonotrode (1), dans laquelle une largeur (19) de la partie inférieure (10) entre les surfaces avant (13) et arrière (14) correspond sensiblement à une largeur (29) de la partie supérieure (20) entre les surfaces avant (13) et arrière (14).

7. Sonotrode (1) selon l'une des revendications précédentes, dans laquelle la partie inférieure (10) présente plusieurs fentes (15), dans laquelle chaque fente (15) présente deux parois de fente, dans laquelle une largeur des segments entre deux parois de fente adjacentes de deux fentes adjacentes (15) est au maximum de (u+o)/3, de préférence (u+o)/4 et de manière particulièrement préférée (u+o)/6.

8. Sonotrode (1) selon l'une des revendications précédentes, dans laquelle la surface de soudage (11) est délimitée par deux surfaces latérales opposées (12, 12') s'étendant sensiblement parallèlement l'une à l'autre et par une surface avant (13) et une surface arrière (14) de la sonotrode (1), dans laquelle la surface avant (13) est agencée au moins au niveau de la surface de soudage (11) selon un angle inférieur à 90° par rapport aux deux surfaces latérales opposées (12, 12'), dans laquelle de préférence la surface arrière (14) est également agencée au moins au niveau de la surface de soudage (11) selon un angle inférieur à 90° par rapport aux deux surfaces latérales opposées (12, 12').

9. Sonotrode (1) selon l'une des revendications précédentes, dans laquelle la partie supérieure (20) de la sonotrode (1) présente au moins une rainure (21), dans laquelle la rainure (21) n'est pas agencée dans le prolongement de la fente (15) de la partie inférieure (10) et/ou dans laquelle la rainure (21) présente une largeur de rainure (27) supérieure à une distance (17) des parois de fente de la fente (15).

10. Sonotrode (1) selon l'une des revendications précédentes, dans laquelle est prévu un support (30) permettant de maintenir la sonotrode (1) dans un dispositif de soudage par ultrasons, dans laquelle le support (30) est agencé au niveau des segments (10') de la partie inférieure (10) de la sonotrode (1).

11. Procédé d'usinage par ultrasons d'un matériau (40), comprenant les étapes consistant à :

> a) fournir une sonotrode (1) selon l'une quelconque des revendications 1 à 10,
> b) fournir un contre-outil (50) comprenant une surface de soudage (51),
> c) placer le matériau entre la surface de soudage (11) de la sonotrode (1) et la surface de soudage (51) du contre-outil (50),
> d) exciter la sonotrode (1) avec une vibration ultrasonore de longueur d'onde $+\lambda$,
> e) transmettre la vibration ultrasonore au matériau (40).

12. Procédé selon la revendication 11, dans lequel la longueur d'onde $\lambda$ répond à $0{,}8\,(u+o) < \lambda < 1{,}2\,(u+o)$ et de préférence à $0{,}9\,(u+o) < \lambda < 1{,}1\,(u+o)$.

13. Procédé selon la revendication 12, dans lequel $0{,}4\,\lambda < u < 0{,}6\,\lambda$, de préférence $\lambda/2 = u$.

14. Procédé selon l'une des revendications 11 à 13, dans lequel, au cours de l'étape e), le matériau (40) est déplacé selon une vitesse d'avance $v > 0$ m/s dans une direction d'avance (101) entre la surface de soudage (11) de la sonotrode (1) et la surface de soudage (51) du contre-outil (50).

Fig. 1

Fig. 2a

Fig. 2b

1

21

20

10

11

15

30

Fig. 3a

27

15

15'

18'

Fig. 3b

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012107522 A1